# EUROPEAN PATENT SPECIFICATION

(11) **EP 1 358 953 B1**
(45) Date of publication and mention of the grant of the patent: **22.03.2006**
(21) Application number: 03101116.6
(22) Date of filing: 23.04.2003
(51) Int. Cl.: B21H 1/12

(54) **A method for producing ring members and a device for performing the method**
Verfahren zur Herstellung von Ringelementen und Vorrichtung zu dessen Durchführung
Procédé de fabrication d'anneaux et dispositif pour mettre en oeuvre ce procédé

(30) Priority: 02.05.2002 SE 2013191
(43) Date of publication of application: 05.11.2003
(73) Proprietor: Aktiebolaget SKF, 415 50 Göteborg (SE)
(72) Inventor: Anderson, Göran, 415 20, Göteborg (SE); Werner, Lars, 421 33, Västra Frölunda (SE); Schena, Elido, 540 37, MARINA DI MASSA (IT)
(74) Representative: Westman, Per Börje Ingemar

(56) References cited:
- DE-A- 1 913 425
- US-A- 2 610 531
- US-A- 3 681 962
- US-A- 4 869 088
- PATENT ABSTRACTS OF JAPAN vol. 2000, no. 03, 30 March 2000 (2000-03-30) & JP 11 347673 A (NIPPON SEIKO KK), 21 December 1999 (1999-12-21)
- PATENT ABSTRACTS OF JAPAN vol. 2000, no. 22, 9 March 2001 (2001-03-09) & JP 2001 121233 A (AMANO ENG SERVICE:KK), 8 May 2001 (2001-05-08)
- PATENT ABSTRACTS OF JAPAN vol. 1995, no. 04, 31 May 1995 (1995-05-31) & JP 07 001066 A (DAIDO STEEL CO LTD), 6 January 1995 (1995-01-06)

## Description

### Background of the invention

The present invention refers to a method for production of ring members, such as race rings for rolling bearings. The present invention refers also to a device for performing such a method. Production of such rings, and especially larger rings, is often effected by forging an annular blank, which is then subjected to cold rolling, followed by other machining operations, such as grinding, honing and the like. At the cold rolling operation the annular blank, made from a bearing steel of common grade is rolled and compressed between a mandrel and a forming roll at ambient temperature and in such a manner that the material thickness is reduced. As the rolling operation is not removing any material from the blank, the diametrical size of the ring will increase, and due to the shape of the forming roll, the axial width of the ring will be kept substantially unchanged. The increase in ring diameter, when using cold rolling, or the rollability of the material is often limited to a maximum of about 2 times and the power consumption is high for driving the forming roll and the receiving roll, which are driven by separate motors. The mandrel is free-wheeling.

Ring production can also be accomplished by means of hot rolling, with a corresponding machine design and operation, whereby the blank is heated to a material temperature of above 1200° C, at which the rolling operation is performed. The rollability is better as compared to the results with cold rolling, but a drawback with this method is that the rings produced have a tendency for distortion and warping, and it s necessary to subject the rings for a heat treatment after the rolling operation.

A method for production of ring members by rolling is disclosed by US-A-2 610 531, which represents the closest prior art for claim 1, where a ring blank is positioned over a pressure roll mandrel, which together with an externally-acting roll forming roll, forms a rolling gap with the pressure roll, whereby both rolls are driven to rotate about mutually aligned axes and a portion of the ring blank being positioned in the rolling gap. The pressure roll being supported in a slide allowing it to be urged towards the externally-acting roll by a hydraulic ram, so as to reduce the size of the rolling gap, during rotation of the externally-acting roll and the pressure roll for reducing the thickness of the ring blank while simultaneously increasing its diameter.

Document US-A-4 869 088 discloses the features of the preamble of claim 2.

The purpose of the present invention is to propose a method for producing ring members, with use of a warm rolling operation, whereby is achieved a rollability which is clearly improved in comparison with the cold rolling method, and which furthermore will not give the negative results obtained when using hot rolling, and this is achieved in accordance with the features of the accompanying claim 1.

A device for performing the method in accordance with the invention is characterized by the features defined in the accompanying claim 2.

The method and device according to the invention will be further described with reference to an embodiment of the device schematically shown in the accompanying drawings.
Fig. 1 shows in a diagrammatic side view in section the main principle for the rolling operation according to the invention, and schematically the main components of the device for performing the rolling operation.
Fig. 2 is a view showing in a direction perpendicularly to the view of Fig. 1 the main components of the device during a rolling operation, wherein the cross-sectional line I-I shows the view of Fig. 1.
Fig. 3 shows in a partial end view the behaviour of the ring blank during the rolling operation, and
Figs. 4-6 show schematically consecutive steps in the supply of a ring blank from a magazine (not shown) to a rolling position, whereby for simplicity reasons, the rolls of the device have been omitted.

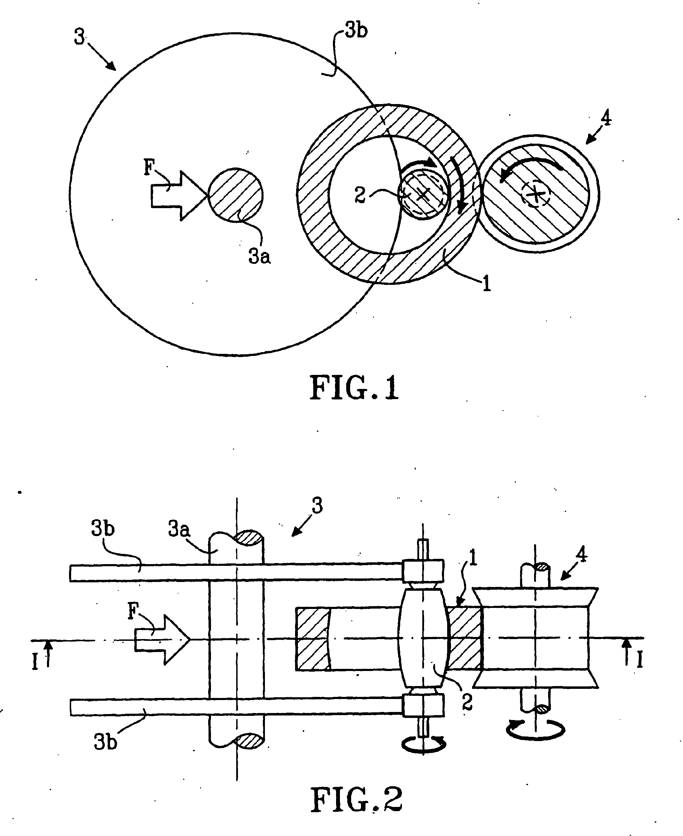

In Fig 1, which is a section along line I-I in Fig. 2, is schematically shown in a side view and in cross section a ring rolling operation as seen along line I-I in Fig. 2. The device or machine according to the invention is shown in Fig. 1 during rolling of a ring-formed blank 1, resting on a mandrel 2 incorporated in the device. The mandrel 2 in turn contacts a receiving roll 3, whereas the ring blank 1 is urged against the mandrel by means of a forming roll 4, which in ordinary manner can have a profiled contact surface. Also the mandrel 2 can have a profiled contact surface for giving the ring a profiled inner surface during the rolling operation. The forming roll 4 is driven to rotate in a direction as shown by the arrow. According to the invention also the mandrel 2 is rotated as shown by the arrow and in a direction opposed to that of the forming roll 4. The ring blank 1 is caused to rotate slowly in a direction shown during the rolling operation by influence from the driven mandrel 2 and from the driven forming roll 4. In the device according to the invention, the receiving roll 3 is non-driven, but it is urged by a force in a direction shown by the arrow F substantially radially towards the mandrel 2 for causing this to apply a contact pressure on the ring blank 1 positioned between the mandrel and the forming roll 4. By the contact between mandrel 2 and receiving roll 3, the latter is also caused to rotate, in the embodiment illustrated in clock-wise direction.

In Fig. 2 is shown in a side view perpendicularly to the view according to Fig. 1, the main components of and the rolling operation performed by the device according to the invention, and here is shown how the surface of the forming roll is substantially cylindrical having tapering end portions, whereas the mandrel 2 has a crowned envelope surface, for giving the ring blank a substantially cylindrical outer surface and a spherical inner surface. As shown the receiving roll 3 is constituted by a shaft 3a and two axially spaced apart wheels 3b, which are rotatably supported on the shaft 3a and straddling the mandrel 2 and the ring blank 1 arranged on the mandrel, and contacting shaft journals projecting axially from the mandrel, thus that the pushing force F can be transferred from the receiving roll 3 and that the rotation of the driven mandrel 2 is imposed upon the receiving roll, via its wheels 3b.

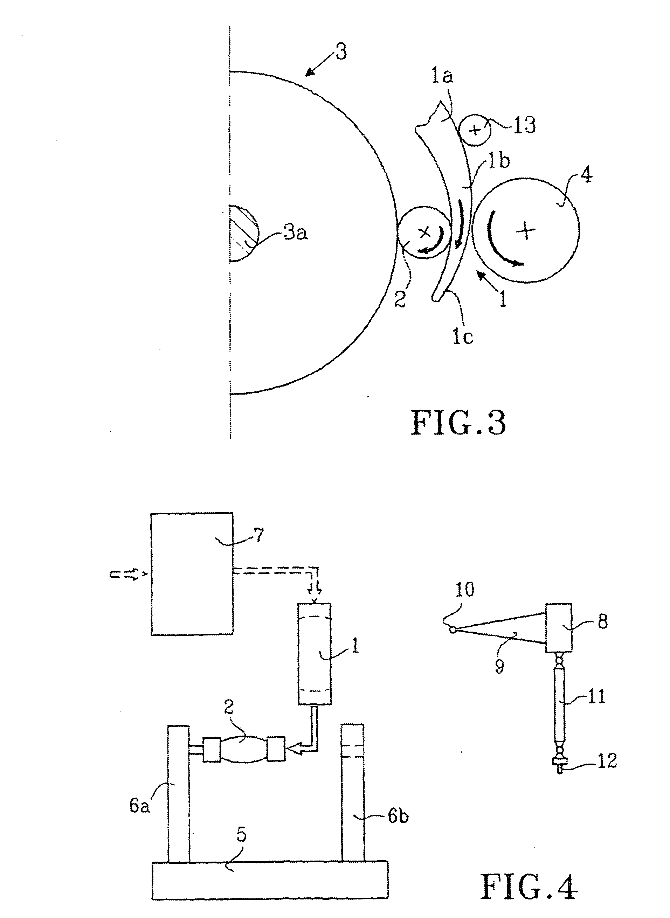

Fig. 3 shows in a fragmentary side view the operating principle for the device according to the invention, and the view shows only a segment of the ring blank I just before it enters the rolling gap between the forming roll 4 and the mandrel 2, during the passage there between and just after it has left the rolling gap. It is illustrated in an exaggerated manner how the ring blank 1 obtains a gradually reduced thickness as it moves toward and through the gap, such as illustrated at 1a, 1b and 1c. As the rolling operation is not removing any material from the blank, the diametrical size of the ring will increase, and due to the shape of the forming roll, with the inclined end portions, the axial width of the ring will be kept substantially constant. A roundness controlling roller 13 is provided to contact the outer surface of the ring blank 2 shortly before the rolling gap.

In Fig. 4 is diagrammatically shown portions of a device according to the invention, and which incorporates a base frame 5 supporting two uprights 6a, 6b, each of which are arranged to support one shaft journal of the mandrel 2. One of these uprights 6b is displaceable in a linear direction towards and from the other upright 6a for permitting loading of blanks 1 into the device, thus that the blank I can be arranged over the mandrel 2. The ring blank 1 is delivered from a not shown magazine and passes a temperature increasing station 7, which for instance can be an induction oven or another type of appropriate heating device for heating the blank to a temperature of a range letting the blank have a temperature of about 725°C, when it is inserted over the mandrel, i.e. a substantially lower temperature than that used in hot rolling operations. A motor 8, intended for rotatably driving the mandrel 2, is arranged to be displaced to and from a driving position, whereby it is designed in the non-driving position to permit loading of a warmed ring blank 1 into operating position on the mandrel 2. Although this can be accomplished in different manners, a preferred and expedient solution is illustrated here, and the motor 8 is pivotably suspended via connecting rods 9 from a pivot point 10. A hingedly supported drive shaft 11 is connected to the output axle of the motor 8, and at its opposite end this drive shaft 11 is provided with a coupling 12, of any known type, which could be easily connected to the free end of the mandrel 2 for transferring rotational motion to this. In Fig. 4 the motor 8 is shown in its swung away position, where it does not interfere with the loading of the warmed ring blank 1.

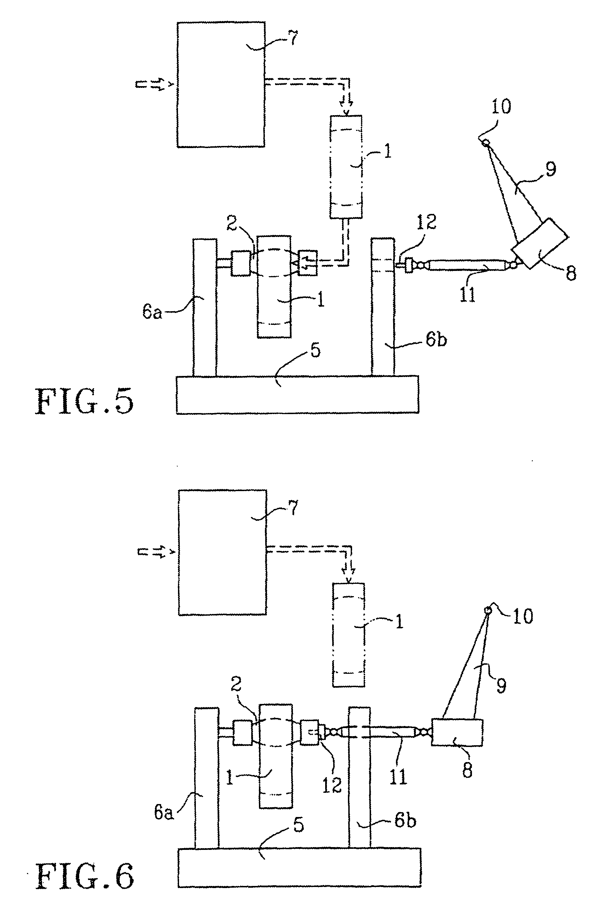

In Fig. 5, the warmed ring blank 1 has been pushed up on the mandrel 2, and the motor 8 has begun swinging about the pivot point 10 towards it driving position. Thereby the hinged drive shaft I 1 has been led with its coupling 12 to the displaceable upright 6b, where it is engaged with this upright 6b. As the motor 8 from this moment continues its swinging motion in the same direction, the displaceable upright 6b will be urged to move towards the first upright 6a, which is preferably fixedly attached to the base 5.

In Fig. 6 finally, the drive shaft 11 and its coupling 12 have reached the side of the mandrel 2 opposed to the first upright 6a, whereby the coupling 12 has coupled the mandrel to the drive shaft 11, thus that the mandrel is rotated when the motor 8 operates.

It shall be mentioned that the receiving roll and the forming roll, for the sake of clarity have been excluded from Figs. 4 - 6, whereas it is understood that the rolling machine illustrated as to the feeding function and mandrel driving function in these figures of course incorporate such components in the manner illustrated in Figs. 1-3.

The steps according to the method are the following:

Ring blanks 1, which can be severed from tube material or forged, are one by one or in batches, transferred from a magazine or the like to a heating station 7, where the individual blanks are warmed to a temperature of about 725°C. The warm ring blank 1 thereupon is pushed up on the mandrel 2, which at this moment is rotatably supported only by the first upright 6a. When the warm ring blank 1 has been positioned on the mandrel 2, a drive shaft 11 connected to a drive motor 8 is coupled to the cantilevered end of the mandrel 2, thereby being in a position to drive the mandrel 2 to rotate. A forming roll 4 is positioned to lay against the outer envelope surface of the ring blank 1 thereby having a substantially axially extending line contact against the ring blank at a position just opposite to that where the mandrel 2 has a line contact with the inner envelope surface of the ring blank. The forming roll 4 is rotated in a direction opposite to the rotational direction of the mandrel 2, thereby pressing the material of the warm ring blank between them, and the receiving roll 3 at the same time is pressed against the shaft journals of the mandrel 2, whereby the mandrel 2 is urged against the portion of the ring blank momentarily positioned in the roll gap between mandrel 2 and forming roll 4. The receiving roll 3 is not directly driven but it is freely rotatably supported and it therefore is rotated following its contact with the shaft journals of the rotatably driven mandrel 2. As the forming roll 4 and the mandrel 2 are rotated in opposed directions, whereby the mandrel 2 is urged towards the forming roll by influence of the receiving roll 3, the thickness of the ring blank is reduced. Due to the shape of the forming roll 4, the axial width of the ring can not be increased, and as no material is removed during the process the reduction in section as intimated with the consecutively reduced sections 1,a, 1b, 1c in Fig. 3, will result in an increase in ring diameter.

The resulting rollability, for a common bearing steel, when using the method and machine described hereabove has proven itself to be up to and even over about 3.0, i.e. a yield which is about 50% higher than obtained when using common cold rolling techniques with otherwise comparable parameters. Compared to the cold rolling technique it is also obtained a 50% decrease in rolling power, as a consequence of the better flowability of the material in the warm ring blank, and also due to the fact that the forming roll 4 and the mandrel 2 are rotatably driven in the new warm rolling process whereas the cold rolling process has used driven forming an receiving rolls, whereas the mandrel was rotated by way of the contact between receiving roll and ring blank.

The resulting ring will have no or at least very low tendencies of distortion after the rolling operation, due to the fact that the blank temperature of about 725°C will not give raise to such internal stresses and warping risks as rings subjected to about 1200°C as used at hot rolling. Taken together, these factors will make it possible to reach production efficiencies superior to those obtained with cold rolling techniques and the ring members produced with the described warm rolling method.

The invention is not limited to the method described and the machine illustrated and described, but modifications and variants are possible within the scope of the accompanying claims.

## Claims

1. A method for producing ring members (1), such as rings for rolling bearings, by means of a rolling operation, incorporating the steps of
warming a ring blank (1) to a temperature of about 725°C,
positioning the warm ring blank (1) over a mandrel (2), which is rotatable about a first axis, positioning a forming roll (4), which is rotatable about a second axis, which is aligned with the said first axis, so as to form a rolling gap with the mandrel (2), and with a portion of the ring blank (1) positioned in the rolling gap,
driving the forming roll (4) to rotate in one rotary direction,
driving the mandrel (2) to rotate in a rotary direction opposed to the rotary direction of the forming roll,
urging the mandrel (2) towards the forming roll (4) so as to reduce the size of the rolling gap, during rotation of the forming roll (4) and the mandrel (2), for reducing the thickness of the ring blank while simultaneously increasing its diameter,
the mandrel (2) during the rolling operation being urged towards the forming roll (4) by means of a receiving roll (3) rotary arranged about a third axis substantially aligned with the said first and second axes, the receiving roll (3) being rotated following its contact with the rotatably driven mandrel (2).

2. A device for performing the method for producing ring members (1) in accordance with claim 1, and which device incorporates a driven forming roll (4), which is rotatably supported about a first axis, a mandrel (2) rotatably supported about a second axis, and a receiving roll (3), which is rotatably supported about a third axis, said first, second and third axes being mutually aligned and positioned spaced apart to form a rolling gap between forming roll and mandrel, whereas the mandrel (2) is movable under influence from the receiving roll (3) for moving towards the forming roll thereby reducing the size of the rolling gap,
**characterized therein**,
that a separate motor (8), is provided to drive the mandrel (2), whereas the receiving roll (3) is arranged to be rotated due to its contact against the driven mandrel, and that the device incorporates a warming station (7) positioned to warm the ring blank (1) before introduction thereof in the rolling gap.

3. A device as claimed in claim 2,
**characterized therein,**
that the separate motor (8) is provided with an articulated drive shaft (11) provided with a coupling (12) for detachably connecting the drive shaft (11) to the mandrel (2), in order easily to connect the motor to the mandrel (2) at rolling operation and to disconnect it during inserting a ring blank (1) on the mandrel (2) and removing a rolled ring therefrom.

## Patentansprüche

1. Verfahren zur Herstellung von Ringelementen (1), wie beispielsweise Ringe für Walzlager, mittels eines Walzvorgangs, umfassend diese Schritte:
Erwärmen eines Ringrohlings (1) auf eine Temperatur von ca. 725°C,
Positionieren des warmen Ringrohlings (1) über einem Dorn (2), der um eine erste Achse drehbar ist,
Positionieren einer Umformwalze (4), die um eine zweite Achse drehbar ist, welche zur ersten Achse ausgerichtet ist, um so einen Walzspalt mit dem Dorn (2) zu bilden,
wobei ein Abschnitt des Ringrohlings (1) in dem Walzspalt angeordnet ist,
Antreiben der Umformwalze (4) zur Rotation in einer Drehrichtung,
Antreiben des Dorns (2) zur Rotation in einer der Drehrichtung der Umformwalze entgegengesetzten Richtung,
Drücken des Dorns (2) zur Umformwalze (4) hin, um so die Größe des Walzspalts während der Rotation der Umformwalze (4) und des Dorns (2) zu reduzieren, um die Stärke des Ringrohlings zu vermindern und gleichzeitig seinen Durchmesser zu vergrößern,
wobei der Dorn (2) während des Walzvorgangs in Richtung der Umformwalze (4) mittels einer Aufnahmewalze (3) gedrückt wird, die um eine im wesentlichen zu der ersten und der zweiten Achse ausgerichtete dritte Achse drehend angeordnet ist und infolge ihres Kontakts mit dem rotierend angetriebenen Dorn (2) gedreht wird.

2. Vorrichtung zur Durchführung des Verfahrens zur Herstellung von Ringelementen (1) nach Anspruch 1, die eine angetriebene Umformwalze (4), die um eine erste Achse drehbar gelagert ist, einen um eine zweite Achse drehbar gelagerten Dorn (2) und eine Aufnahmewalze (3) umfaßt,
die um eine dritte Achse drehbar gelagert ist, wobei die erste, die zweite und die dritte Achse gegenseitig zueinander ausgerichtet und voneinander beabstandet angeordnet sind, um einen Walzspalt zwischen der Umformwalze und dem Dorn zu bilden, und der Dorn (2) unter Einwirkung der Aufnahmewalze (3) bewegbar ist, um sich in Richtung der Umformwalze zu bewegen und **dadurch** die Größe des Walzspalts zu reduzieren,
**dadurch gekennzeichnet,**
**daß** ein separater Motor (8) vorgesehen ist, um den Dorn (2) anzutreiben, während die Aufnahmewalze (3) so angeordnet ist, daß sie infolge ihres Kontakts mit dem angetriebenen Dorn gedreht wird, und daß die Vorrichtung eine Aufwärmstation (7) aufweist, um den Ringrohling (1) vor dessen Einführen in den Walzspalt zu erwärmen.

3. Vorrichtung nach Anspruch 2
**dadurch gekennzeichnet,**
**daß** der separate Motor (8) mit einer Gelenkantriebswelle (11) versehen ist, die mit einer Kupplung (12) ausgestattet ist, um die Antriebswelle (11) lösbar mit dem Dorn (2) zu verbinden, um den Motor beim Walzen einfach mit dem Dorn (2) zu verbinden und ihn von diesem während des Einführens eines Ringrohlings (1) auf den Dorn (2) und des Abnehmens eines gewalzten Ringes zu trennen.

## Revendications

1. Procédé pour produire des éléments annulaires (1), tels que des bagues pour des roulements à bille, à l'aide d'une opération de laminage, incorporant les étapes consistant à :
chauffer une ébauche de bague (1) à une température d'environ 725° C,
positionner l'ébauche de bague chaude (1) sur un mandrin (2), qui peut tourner autour d'un premier axe,
positionner un rouleau de formage (4), qui peut tourner autour d'un deuxième axe, qui est aligné avec ledit premier axe, de façon à former un espace de laminage avec le mandrin (2), avec une partie de l'ébauche de bague (1) qui est positionnée dans l'espace de laminage,
entraîner le rouleau de formage (4) de façon à tourner dans une direction de rotation,
entraîner le mandrin (2) de façon à tourner dans une direction de rotation opposée à la direction de rotation du rouleau de formage,
pousser le mandrin (2) vers le rouleau de formage (4) de façon à réduire la taille de l'espace de laminage, durant la rotation du rouleau de formage (4) et du mandrin (2), pour réduire l'épaisseur de l'ébauche de bague tout en augmentant simultanément son diamètre,
le mandrin (2), durant l'opération de laminage, étant poussé vers le rouleau de formage (4) à l'aide d'un rouleau de réception (3) agencé en rotation autour d'un troisième axe sensiblement aligné avec lesdits premier et deuxième axes, le rouleau de réception (3) tournant grâce à son contact avec le mandrin entraîné en rotation (2).

2. Dispositif pour mettre en oeuvre le procédé pour produire des éléments annulaires (1) selon la revendication 1, ce dispositif incorporant un rouleau de formage entraîné (4) qui est supporté de façon à pouvoir tourner autour d'un premier axe, un mandrin (2) supporté de façon à pouvoir tourner autour d'un deuxième axe, et un rouleau de réception (3) qui est supporté de façon à pouvoir tourner autour d'un troisième axe, lesdits premier, deuxième et troisième axes étant mutuellement alignés et positionnés de façon espacée les uns des autres afin de former un espace de laminage entre le rouleau de formage et le mandrin, tandis que le mandrin (2) est mobile sous l'influence du rouleau de réception (3) pour se déplacer vers le rouleau de formage, de façon à réduire ainsi la taille de l'espace de laminage,
**caractérisé en ce que** :
un moteur séparé (8) est disposé pour entraîner le mandrin (2), tandis que le rouleau de réception (3) est agencé de façon à tourner grâce à son contact contre le mandrin entraîné, et **en ce que** le dispositif incorpore un poste de chauffage (7) positionné pour chauffer l'ébauche de bague (1) avant l'introduction de celle-ci dans l'espace de laminage.

3. Dispositif selon la revendication 2,
**caractérisé en ce que** :
le moteur séparé (8) est muni d'un arbre d'entraînement articulé (11) muni d'un accouplement (12) pour relier de façon détachable l'arbre d'entraînement (11) au mandrin (2) afin de relier facilement le moteur au mandrin (2) dans une opération de laminage et de le déconnecter durant l'insertion d'une ébauche de bague (1) sur le mandrin (2) et de retirer une bague laminée de celui-ci.
